# EUROPEAN PATENT SPECIFICATION

(11) **EP 2 287 361 B1**
(45) Date of publication and mention of the grant of the patent: **10.04.2013**
(21) Application number: 09251593.1
(22) Date of filing: 18.06.2009
(51) Int. Cl.: C23F 1/28, B23H 11/00, B23H 9/10, C23G 1/10

(54) **Recast removal method**
Neuguss-Entfernungsverfahren
Procédé de suppression de refonte

(43) Date of publication of application: 23.02.2011
(73) Proprietor: United Technologies Corporation, Hartford, CT 06101 (US)
(72) Inventor: Gehron, Michael J., Stuart Florida 34997 (US); Hodgens, Henry M., Fort Pierce Florida 34982 (US)
(74) Representative: Leckey, David Herbert

(56) References cited:
- JP-A- 7 102 381
- US-A- 4 411 730
- US-A1- 2002 189 632
- WANG C-C ET AL: "Recast layer removal after electrical discharge machining via Taguchi analysis: A feasibility study" JOURNAL OF MATERIALS PROCESSING TECHNOLOGY 20090421 ELSEVIER LTD; THE BOULEVARD GB, vol. 209, no. 8, 21 April 2009 (2009-04-21), pages 4134-4140, XP002554834

## Description

### BACKGROUND

This disclosure relates to removing a recast layer from a metal substrate, such as a turbine blade.

Structures used in the aerospace industry, such as turbine blades, typically include complex passages that are provided in a substrate formed of a superalloy.

Passages, such as cooling holes extending from an inner passage to an outer surface of the turbine blade, cannot be machined using conventional metal removal processes such as drilling. These cooling holes and other cooling passages are often formed using an electrical discharge machining (EDM) process, which results in a recast layer in the machined area. The recast layer has different metallurgical characteristics than that of the substrate. For example, the recast layer may include small cracks due to shrinkage as the molten metal from the EDM process resolidifies.

This recast layer is typically removed from the substrate. A process has been developed by which the recast layer is removed from the substrate using a chemical milling process. The chemical milling process includes submersing the substrate in an etchant, which comprises a solution of HNO₃, HCl, H₂O, FeCl₃ and CuSO₄. As the recast is removed from the substrate, gases are evolved on the surface of the substrate. Once the gases cease evolving, it was believed that all of the recast material had been removed from the substrate.

Processes for removing a recast layer chemically are disclosed in WANG C-C ET AL : "Recast layer removal after electrical discharge machining via Taguchi analysis: A feasibility study" JOURNAL OF MATERIALS PROCESSING TECHNOLOGY 20090421 ELSEVIER LTD; THE BOULEVARD GB, vol. 209, no. 8, 21 April 2009 (2009-04-21), pages 4134-4140, XP002554834 and US-A-4411730.

### SUMMARY

According to the invention is a method of removing recast from a substrate as set forth in claim 1.

The method may provide a visual indication of the presence of the recast when the part has been removed from the etchant.

The chemical etchant is comprised of a sulfuric acid solution that includes sodium chloride, sodium fluoride and ammonium persulfate. After chemical removal of the recast from the substrate, the recast may be physically removed from the substrate, for example, by media blasting. The chemical and physical recast removal process can be repeated as desired. To ensure that all the recast has been removed, the substrate may be wiped, for example, using a cloth. If all the recast has been removed, the cloth will not change in appearance or color.

### BRIEF DESCRIPTION OF THE DRAWINGS

The disclosure can be further understood by reference to the following detailed description when considered in connection with the accompanying drawings wherein:
Figure 1 is an example aerospace part having recast.
Figure 2 is an enlarged cross-section view of the part depicting the recast layer.
Figure 3 schematically illustrates an example method of removing recast from a part.

### DETAILED DESCRIPTION

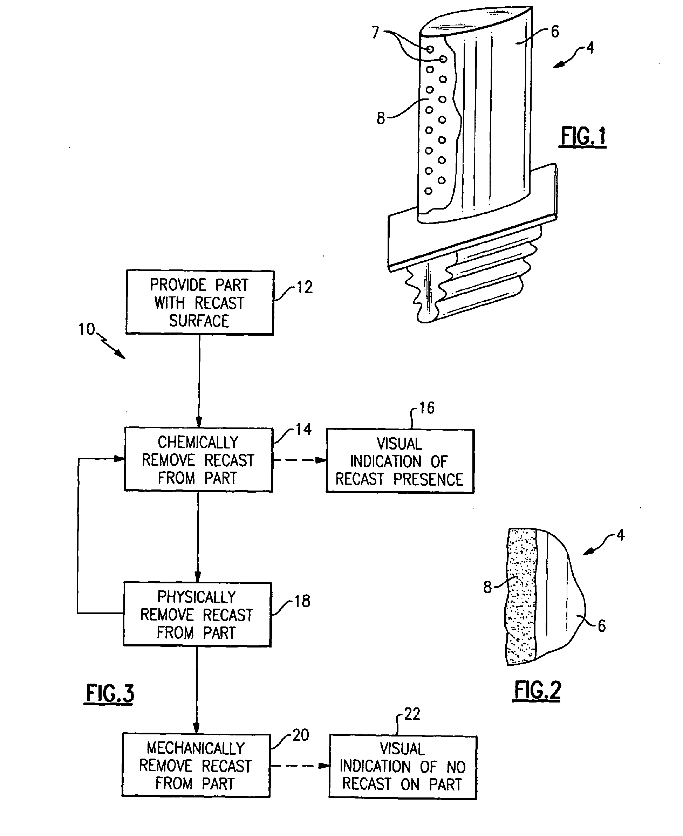

Referring to Figures 1 and 2, a recast layer 8 is produced during a machining process, such as electrodischarge machining holes 7, to remove material from a substrate 6, such as an airfoil 4. Any suitable process, such as EDM, is employed to form the holes. It is desirable to remove the recast layer 8 from the substrate 6 to improve the integrity of the part. Removing the recast layer 8 from the substrate 6 without removing or altering any of the substrate 6 tends to improve the integrity of the part.

An example method of removing recast is schematically illustrated by a method 10 shown in Figure 3. The method 10 includes providing a part with a recast surface, as indicated at block 12. In one example, the part is an airfoil constructed from a nickel superalloy, such as IN718. The substrate may include a recast layer approximately 2.36 x 10⁻⁵ mm (0.0006 inch) thick subsequent to forming a hole by EDM, for example.

The part is immersed in a chemical etchant. The part may be media blasted prior to immersion of the part in the chemical etchant to increase the activity of the chemical etchant at the surface of the substrate. The chemical etchant is a solution of sulfuric acid containing sodium chloride, sodium fluoride and ammonium persulfate. In one example, one liter (33.8 oz) of etchant is produced by adding approximately 145-165 mL (4.9 oz - 5.6 oz) of concentrated sulfuric acid (approximately 95-98% in one example) to 700 mL (23.7oz) of water. In one example, the sulfuric acid is 152 mL (5.1 oz). The solution is allowed to cool to below 80°F (26.7°C) subsequent to the resultant exothermic reaction. Approximately 55-85 grams (1.9 oz - 3.0 oz) of sodium chloride and 3-7 grams (0.1 oz - 0.2 oz) sodium fluoride are added to the solution. In one example, 72 grams (2.5 oz) of sodium chloride and 5 grams (0.2 oz) of sodium fluoride are added to the solution. Approximately 55-85 grams (1.9 oz - 3.0 oz) of ammonium persulfate are added to the solution. In one example, 72 grams (2.5 oz) of ammonium persulfate are added to the solution. The solution is brought to the one liter (33.8 oz) final volume with water.

The part is immersed in the solution at approximately room temperature for between approximately 5 and 30 minutes and then removed from the etchant and rinsed, if desired. The chemical etchant chemically removes approximately 90% of the recast layer, as indicated at block 14. The chemical removal process results in a visual indication on the part that recast is present, as indicated at block 16. That is, chemically removed recast can be seen with the naked eye. The visual indication is the formation of a dark, soft material on the substrate that is darker than the surrounding substrate, which remains visible after the part is removed from the etchant.

The chemical etchant removes the recast layer from the substrate through a catalytic process. The persulfate disassociates from the ammonium persulfate in solution producing a monoatomic chlorine at the surface of the substrate where selective oxidation takes place. However, the persulfate does not oxidize the substrate itself. The fluoride disassociated from the sodium fluoride keeps the surface of the substrate active. Hydrochloric acid is formed by the sodium chloride dissolved in the sulfuric acid.

The remaining recast on the substrate and the material clinging to the substrate may be physically removed from the part, as indicated at block 18. Example physical removal processes are sonic agitation, immersion in an alkali cleaner, physical brushing or media blasting. For example, the recast can be removed using a vapor blast process with 1250 grit novaculite at 344 kPa (50 psig).

The part can be reimmersed in the chemical etchant to further remove any remaining recast. Additional immersions of the part will produce less, spotty darkening, if there is some remaining recast on the substrate. After the chemical and physical removal of the recast has been repeated a desired number of times, any remaining recast can be mechanically removed, as indicated at block 20. For example, a material, such as a light colored cloth, may be rubbed or wiped on the substrate to mechanically remove the remaining recast. Any remaining recast will be deposited on the cloth, providing a visual indication that recast was still on the substrate. The part can be rubbed with a clean cloth until there is no change in the color of the cloth, which indicates that there is no remaining recast on the substrate (block 22).

Tests have indicated that the substrate has not been compromised as a result of immersion into the disclosed chemical etchant. That is, no substrate material has been removed from the substrate. Recast removal has been confirmed by immersing the part in a descaling solution, such as an acid, and plating the part with nickel. Metallographic examination of the interface between the nickel plate and stripped substrate revealed no remaining recast or other undesired substrate surface characteristics.

Although a preferred embodiment has been disclosed, a worker of ordinary skill in this art would recognize that certain modifications would come within the scope of the claims. For that reason, the following claims should be studied to determine their true scope and content.

## Claims

1. A method of removing recast from a nickel superalloy substrate (6) comprising the steps of:
immersing a substrate (6) having recast (8) in a solution; and
removing the recast (8) from the substrate (6) with the solution; **characterised in that** said solution is a solution of sulphuric acid including ammonium persulfate, and **in that** the solution further includes sodium fluoride and sodium chloride.

2. The method according to claim 1, wherein the solution includes approximately 145-165 mL of the sulfiuric acid at approximately 95-98% concentration per liter of solution.

3. The method according to claim 1 or 2, wherein the solution includes approximately 3-7 grams of the sodium fluoride per liter of solution.

4. The method according to claim 1, 2 or 3, wherein the solution includes approximately 55-85 grams of the sodium chloride per liter of solution.

5. The method according to any preceding claim, wherein the solution includes approximately 55-85 grams of ammonium persulfate per liter of solution.

6. The method according to any preceding claim, wherein the removing step does not remove the substrate.

7. The method according to any preceding claim, wherein the removing step produces a material comprising chemically removed recast, the material having a different color than the recast (8).

8. The method according to any preceding claim, comprising the step of physically removing recast (8) from the substrate (6) after the chemical removal step.

9. The method according to claim 8, wherein the physical removing step includes media blasting the substrate (6).

10. The method according to any preceding claim, wherein the chemical removal step provides a visual indication on the substrate (6) with the substrate (6) removed from the solution,

11. The method according to any preceding claim, comprising wiping the substrate (6) with a material, and providing a visual indication on the material of the presence of recast (8) on the substrate (6).

## Patentansprüche

1. Verfahren zum Entfernen von Umgeschmolzenem von einem Substrat (6) aus Nickel-Superlegierung, folgende Schritte aufweisend:
Eintauchen eines Substrats (6) mit Umgeschmolzenem (8) in eine Lötung und
Entfernen des Umgeschmolzenen (8) von dem Substrat (6) mit der Lösung;
**dadurch gekennzeichnet, dass** die Lösung eine Schwefelsäure-Lösung ist, die Ammoniumpersulfat enthält, und dass die Lösung außerdem Natriumfluorid und Natriumchlorid enthält.

2. Verfahren nach Anspruch 1, wobei die Lösung näherungsweise 145-165 mL der Schwefelsäure mit einer Konzentration von näherungsweise 95-98% pro Liter Lösung enthält.

3. Verfahren nach Anspruch 1 oder 2, wobei die Lösung näherungsweise 3-7 Gramm des Natriumflorids pro Liter Lösung enthält.

4. Verfahren nach Anspruch 1, 2 oder 3, wobei die Lösung näherungsweise 55-85 Gramm des Natriumchlorids pro Liter Lösung enthält.

5. Verfahren nach einem vorangehenden Anspruch, wobei die Lösung näherungsweise 55-85 Gramm Ammoniumpersulfat pro Liter Lösung enthält.

6. Verfahren nach einem vorangehenden Anspruch, wobei der Schritt des Entfernens nicht das Substrat entfernt.

7. Verfahren nach einem vorangehenden Anspruch, wobei der Schritt des Entfernens ein Material erzeugt, das chemisch entferntes Umgeschmolzenes aufweist, wobei das Material eine andere Farbe als das Umgeschmolzene (8) hat.

8. Verfahren nach einem vorangehenden Anspruch, aufweisend den Schritt des physikalisch Entfernens von Umgeschmolzenem (8) von dem Substrat (6) nach dem Schritt des chemisch Entfernens.

9. Verfahren nach Anspruch 8, wobei der Schritt des physikalisch Entfernens ein Abstrahlen des Substrats (6) mit einem Medium umfasst.

10. Verfahren nach einem vorangehenden Anspruch, wobei der Schritt des chemisch Entfernens ein visuelles Anzeichen auf dem Substrat (6) liefert, wenn das Substrat (6) aus der Lösung entfernt ist.

11. Verfahren nach einem vorangehenden Anspruch, aufweisend ein Abwischen des Substrats (6) mit einem Material und Liefern eines visuellen Anzeichens auf dem Material für das Vorliegen von Umgeschmolzenem (8) auf dem Substrat (6).

## Revendications

1. Procédé d'enlèvement de refonte d'un substrat en superalliage de nickel (6), consistant à :
immerger un substrat (6) comportant une refonte (8) dans une solution ; et
enlever la refonte (8) du substrat (6) avec la solution ; **caractérisé en ce que** ladite solution est une solution d'acide sulfurique contenant du persulfate d'ammonium, et **en ce que** la solution contient en outre du fluorure de sodium et du chlorure de sodium.

2. Procédé selon la revendication 1, dans lequel la solution contient environ 145-165 ml de l'acide sulfurique à une concentration d'environ 95-98 % par litre de solution.

3. Procédé selon la revendication 1 ou 2, dans lequel la solution contient environ 3-7 grammes du fluorure de sodium par litre de solution.

4. Procédé selon la revendication 1, 2 ou 3, dans lequel la solution contient environ 55-85 grammes du chlorure de sodium par litre de solution.

5. Procédé selon l'une quelconque des revendications précédentes, dans lequel la solution contient environ 55-85 grammes de persulfate d'ammonium par litre de solution,

6. Procédé selon l'une quelconque des revendications précédentes, dans lequel l'étape d'enlèvement n'enlève pas le substrat.

7. Procédé selon l'une quelconque des revendications précédentes, dans lequel l'étape d'enlèvement produit un matériau contenant une refonte enlevée par un processus chimique, le matériau ayant une couleur différente de celle de la refonte (8).

8. Procédé selon l'une quelconque des revendications précédentes, comprenant l'étape d'enlèvement de la refonte (8) du substrat (6) par un processus physique après l'étape d'enlèvement par un processus chimique.

9. Procédé selon la revendication 8, dans lequel l'étape d'enlèvement par un processus physique comprend un décapage du substrat (6) par projection d'abrasif.

10. Procédé selon l'une quelconque des revendications précédentes, dans lequel l'étape d'enlèvement par un processus chimique présente une indication visuelle sur le substrat (6) quand le substrat (6) est retiré de la solution.

11. Procédé selon l'une quelconque des revendications précédentes, comprenant un essuyage du substrat (6) avec un matériau, et la présentation d'une indication visuelle, sur le matériau, de la présence de refonte (8) sur le substrat (6).
